# EUROPEAN PATENT APPLICATION

(11) **EP 1 434 152 A1**
(43) Date of publication of application: **30.06.2004**
(21) Application number: 02760812.4
(22) Date of filing: 06.09.2002
(51) Int. Cl.: G06F 17/60

(54) **PROGRAM CREATION SUPPORT SYSTEM**

(30) Priority: 07.09.2001 JP 2001271625; 10.10.2001 JP 2001312280
(71) Applicant: Ricoh Company, Ltd., Tokyo 143-8555 (JP)
(72) Inventor: KAWANO, Seiji, Shinagawa-ku, Tokyo 141-0031 (JP); INADA, Yukiko, Akishima-shi, Tokyo 196-0034 (JP)
(74) Representative: Schwabe, Hans-Georg, Dipl.-Ing.
(86) International application number: PCT/JP2002/009114
(87) International publication number: WO 2003/023671

(57) **Abstract**

A server 100 of a program creation company presents program plan information representing a program plan displayed in a form of a list, to a terminal 200 through Internet 10. A user of the terminal 200 browses the program plan information. In a case where there is a program plan that the user desires to invest, the user informs the server 100 of information representing that the user desires to invest and representing a desired investment amount. The server 100 accepts subscription for investment from the terminal 200 for a predetermined period of time. The server 100 compares the total amount of investment and the estimated creation cost, and determines whether or not the program can be created. In a case where the program can be created, a predetermined billing process for an investor is carried out. The program creation company creates the program using the collected investment, and distributes the program to the terminal 200 through the Internet 10 from the server 100. The server 100 sends a predetermined page for participating in planning a program to the terminal 200 of the investor.

## Description

### Technical Field

The present invention relates to a program creation support method, a program creation support system, a server device and a computer program product.

### Background Art

In conventional TV program broadcast (e.g. ground-wave TV broadcast), generally, a program creation company creates a program, supplies a broadcasting station, such as a TV station, etc., with the program. Then, the broadcasting station broadcasts the program.

Meanwhile, with a variety of broadcasting configurations including digital multi-channel broadcasting using a satellite, cable TV, etc., there is a paucity of programs to be sent to viewers. Thus, it is more demanded that the program creation company supply the broadcasting station with new programs.

However, in the present conditions, the program creation company depends on the program purchase cost paid by the broadcasting station, and so there is only a limited route for collecting money for creating the program by itself. Thus, it is desired that there is established a method with which the program creation company can collect the money for program creation:

In such conditions, the Internet broadcasting system is getting settled as one broadcasting configuration, based on the recent rapid progress in the Internet technologies and the maintenance in the communication infrastructure represented by the broadband, etc. In the Internet broadcasting, for example, anyone can broadcast (distribute) contents from an inexpensive apparatus, such as a personal computer, etc. That is, it is possible to broadcast programs without the expensive broadcasting facility used conventionally by the broadcasting station, and thus the program creation company can broadcast the program created by itself. In this case, the program creation company needs to collect the cost of creating the program and the cost of broadcasting the program by itself. It is thus important to establish a method for collecting such costs.

As explained above, with a variety of broadcasting configurations, programs and channels may get specialized, so it is demanded that such programs be created in accordance with viewers' requests. However, if the conventional processes of creating programs in the ground-wave broadcasting, etc. are simply followed, there may be a lack of ideas for creating new programs. It is difficult to suitably create programs in such a situation. Hence, in the program creation company, a new method for creating a program is demanded.

### Disclosure of Invention

The present invention has been made in consideration of the above. It is accordingly an object of the present invention to provide a program creation support method, a program creation support system, a server device and computer program product which enable to smoothly proceed to create a program.

According to the first aspect of the present invention, there is provided a program creation support method comprising: presenting plan information representing a plan of a program through a communication network; inviting an investor who invests in a creation cost of the program represented in the plan presented in the plan presenting step through the communication network; billing and collecting the creation cost of the program from the investor who has subscribed to invitation in the investor inviting step through the communication network; and creating the program represented in the plan information, spending the creation cost collected in the creation cost collecting step.

In the first invention, for example, a program creation company or the like presents the program's plan through the communication network, such as the Internet, etc., and accepts subscription for investment from one(s) who desires to invest. The program creation company carries out a predetermined billing process through the Internet so as to collect an investment with respect to the one who desires to invest invited in this manner, and creates the program at the collected investment. Hence, the program creation company itself can present the plan of the program to an infinite number of people and collect the investment from the one who desires to invest, hence enabling to collect the cost of creating the program with ease and efficiently.

In the above program creation support method, the advantage providing step of providing the investor with a predetermined advantage may include collecting a comment on the plan presented in the plan presenting step from the investor. Thus, the investor can give a comment on the plan to the program creation company. The program creation company creates the program reflecting given comment, whereby the investor participates in planning the program. This may expectedly increase the number of the investors and efficiently make progress in creating the program.

The plan acquiring step may include acquiring the plan of the program from the investor. Due to the above advantage, the investor can participate in the program creation, thereby expectedly increasing the number of investors and efficiently making progress in creating the program. The program creation company can externally collect various program plans, thus acquiring ideas about new program's creation. Thus, new programs rich in variety can be created.

In the above program creation support method, the plan presenting step may include presenting information representing proposed elements (e.g. proposed performers) necessary for creating the planned program. In this case, the advantage providing step may include collecting information specifying a desired one of the proposed elements from the investor. When presenting the program plan to the investor, information about the performers, the director and the script writer of the program may be presented, and the investor can select desired staff for the program. This information is summed up, and only those popular performers are picked up for the program, thereby creating a viewer-desired program. This advantage is given only to the investor(s), thereby expectedly increasing the number of investors and efficiently making progress in creating the program.

According to the second aspect of the present invention, there is provided a program creation suppoit system for supporting creation of a program to be distributed to a plurality of terminals from a center through a communication network, the center comprising: a plan information acquiring unit which acquires plan information representing a plan of a program; a plan information sending unit which sends the plan information acquired by the plan information acquiring unit together with invitation information for inviting investor investing in this plan, to the plurality of terminals through the communication network; a subscription information receiving unit which receives subscription information for subscribing to invitation represented in the plan information sent by the plan information sending unit, from the terminals through the communication network; a billing processing unit which executes a billing process for billing the investor who has sent the subscription information received by the subscription information receiving unit for a program creation cost, through the communication network; a program information creating unit which creates program information representing the program created using the program creation cost collected through the billing process by the billing processing unit; a program information storage unit which stores the program information created by the program information creating unit; and a program distributing unit which distributes the program information stored in the program information storage unit through the communication network.

According to the third aspect of the present invention, there is provided a server device comprising: connection means for connecting with a communication network; plan acquiring means for acquiring and storing a plan of a program; plan presenting means for presenting plan information representing the plan acquired by the plan acquiring means through the communication network by controlling the connection means; invitation information presenting means for creating investor invitation information representing invitation to an someone investing in a plan represented in the plan information presented by the plan presenting means, and presenting the created investor invitation information through the communication network by controlling the connection means; subscription information receiving means for receiving subscription information representing a subscription request on the investor invitation information represented by the subscription information representing means through the communication network by controlling the connection means; and billing processing means for executing a billing process for billing the investor for a creation cost of the program represented in the plan presented by the plan presenting means through the communication network by controlling the connection means.

### Brief Description of Drawings

FIG. 1 is a diagram showing the structure of a program creation support system according to an embodiment of the present invention.
FIG. 2 is a block diagram showing the structure of a server shown in FIG. 1.
FIG. 3 is a diagram showing an example of information which is stored in a plan information database shown in FIG. 2.
FIGS. 4(a) and 4(b) are diagrams showing examples of information which are stored in an investment information database shown in FIG. 2, and respectively showing examples of an investment amount allocation reference table and subscribed investment amount information tables.
FIG. 5 is a flowchart for explaining an investor invitation process according to an embodiment of the present invention.
FIG. 6 is a diagram showing exemplarily the display of a program plan presenting page sent in the investor invitation process shown in FIG. 5.
FIG. 7 is a diagram showing exemplarily the display of an investment procedure registration page sent in the investor invitation process shown in FIG. 5.
FIG. 8 is a diagram showing exemplarily the display of an e-mail sent in the investor invitation process shown in FIG. 5.
FIG. 9 is a diagram showing exemplarily another display of an e-mail sent in the investor invitation process shown in FIG. 5.
FIG. 10 is a diagram showing exemplarily another display of a program plan presenting page sent in the investor invitation process shown in FIG. 5.
FIG. 11 is a diagram showing exemplarily an input form page according to a modification of the embodiment of the present invention.

### Best Mode for Carrying Out the Invention

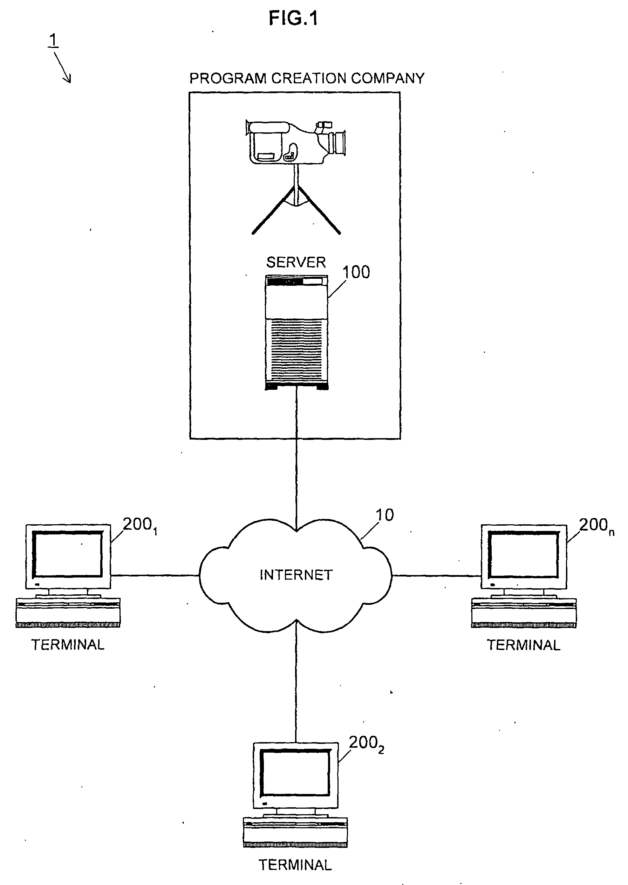

FIG. 1 is a diagram showing the structure of a program creation support system according to an embodiment of the present invention. As illustrated, the program creation support system 1 comprises a communication network (Internet) 10, a server 100 of a program creation company, and a plurality of terminals 200₁ to 200ₙ.

The communication network 10 mutually connects the server 100 with the plurality of terminals 200, and intervenes information transmission between both. In this embodiment, the Internet is employed as the communication network 10, and hereinafter referred to as the Internet 10. The Internet 10 is a communication network based on a predetermined communication protocol, such as a TCP/IP (Transmission Control Protocol/Internet Protocol), etc. In this case, the server 100 is connected to the Internet 10 through, for example, a private line, etc. The plurality of terminals 200 are connected to the Internet 10 through a gateway unit (not illustrated) which executes predetermined protocol transformation. The plurality of terminals 200 and the gateway unit are connected through any one or a combination of, for example, a private line, a public line network, an ISDN line network, a mobile communication line network, a cable TV (CATV) network, a wire broadcasting network, and a radio communication network, etc.

The server 100 includes an information processor, such as a mainframe, a workstation or a personal computer, etc. In this embodiment, assume that the server 100 is installed in the program creation company. This program creation company is a company for creating picture programs, and the created programs are broadcasted (distributed) through the Internet 10.

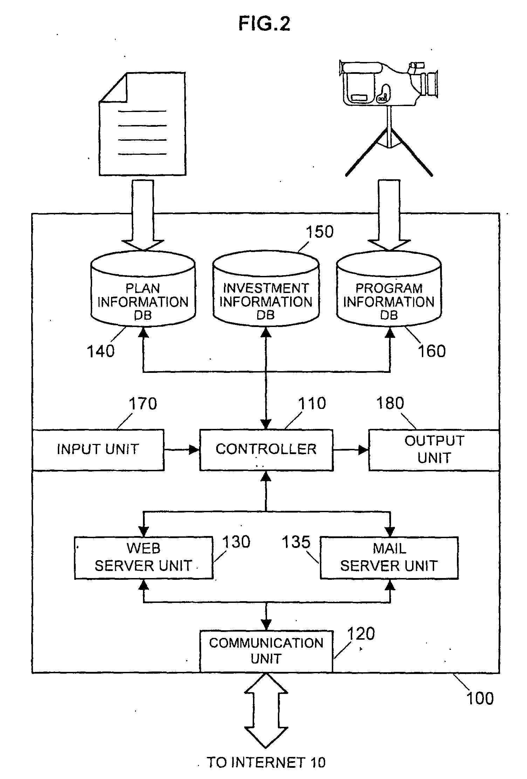

The structure of the server 100 will now be explained with reference to the block diagram of FIG. 2. As illustrated, the server 100 comprises a controller 110, a communication unit 120, a web server unit 130, a mail server unit 135, a plan information database 140, an investment information database 150, a program information database 160, an input unit 170, and an output unit 180.

The controller 110 includes, for example, a CPU (Central Processing Unit), etc., and controls each part of the server 100. The controller 110 also executes a predetermined program(s) stored in a non-illustrative memory, and carries out each process to be described later.

The communication unit 120 includes a communication device, for example, a router, etc., connects the server 100 with the Internet 10, and sends and receives various information.

The web server unit 130 includes a storage device, such as a hard disk device, and stores a program (hereinafter referred to as a "CGI program") corresponding to the operating architecture, the program including CGI (Common Gateway Interface), etc. Upon execution of this CGI program by the controller 110, web page data representing a predetermined web page corresponding to a request or response from the terminal 200 is dynamically created. The controller 110 controls the communication unit 120, and sends the created web page data to the terminal 200 appropriately, based on a predetermined communication protocol, for example, an HTTP (Hyper Text Transfer Protocol), a TCP/IP (Transfer Control Protocol/Internet Protocol) or the like. The controller 110 receives information corresponding to the sent web page data, and processes the received information.

The mail server unit 135 creates an e-mail based on an instruction of the controller 110, and also sends the created e-mail to the sender based on a communication protocol, for example, an SMTP (Simple Mail Transfer Protocol), etc.

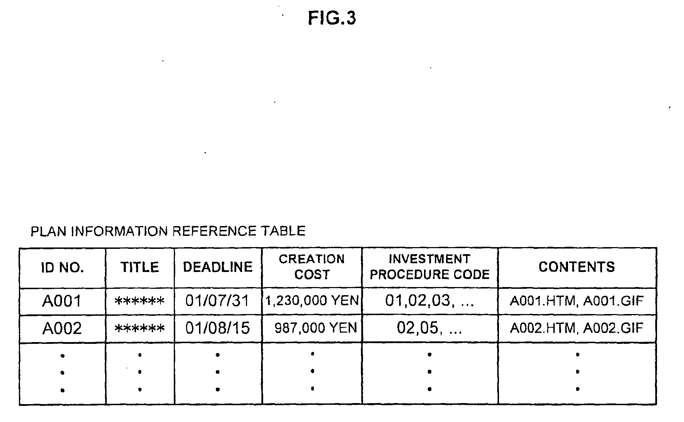

The plan information database 140 includes a rewritable storage device, such as a hard disk device, etc., and stores plan information representing a program plan. The plan information represents the program plan including text information and image information. The text information represents, for example, the title of a program, the broadcasting time of the program, the performers, the program framework, the contents of the program, and the like. The image information represents, for example, a continuity of picture scripts for explaining the development of the program, photos of the performers, and the like. The plan information database 140 stores a plan information reference table, which is shown in FIG. 3 and records information related to the stored proposed information. As shown in FIG. 3, the plan information reference table records information representing "Identification Number" assigned to each plan information, the deadline for subscribing an investment for each plan, the title of each planned program, the estimated cost of creating the planned program, the code representing an applicable procedure for an investment, and the file name (referred to as "contents" in the illustration) specifying corresponding plan information, etc.

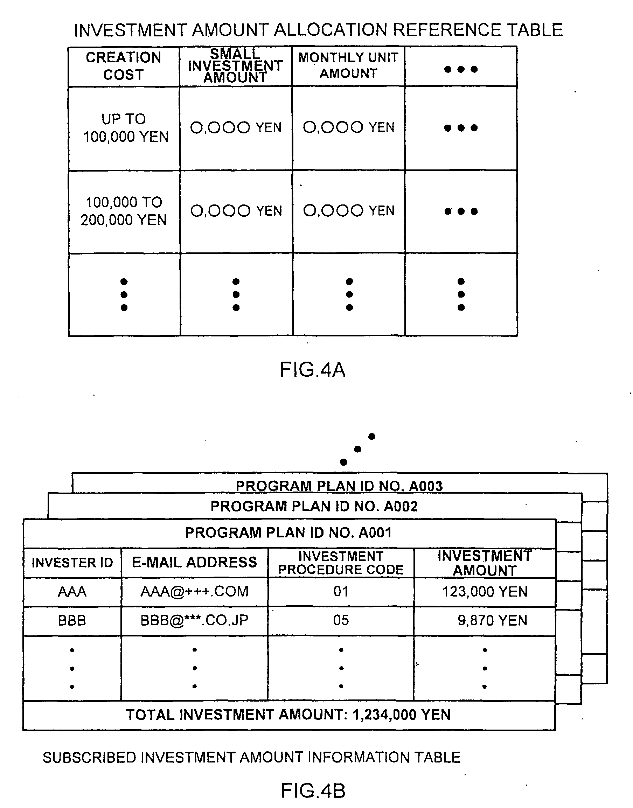

The investment information database 150 includes a rewritable storage device, such as a hard disk device, etc. FIGS. 4(a) and 4(b) show examples of information stored in the investment information database 150. As shown, the investment information database 150 records an investment amount allocation reference table ((FIG. 4(a)) and subscribed investment amount information tables ((FIG. 4(b)).

The investment amount allocation reference table records the unit amount of investment calculated in accordance with the cost of creating the program, in relation to each investment procedure as will be explained later. In this embodiment, the unit amount of investment is determined based on the cost of creating the program. Various investment procedures are prepared, and the unit amount of investment differs between the investment procedures. The investment amount allocation reference table is provided for calculating the unit amount for each investment procedure.

The subscribed investment amount information table records information representing the investment amount subscribed by those (one) who desire(s) to invest, in association with each program plan. As shown in FIG. 4(b), there are created tables each of which has a key representing an identification number of program plan information. Each of the tables includes records each having a key representing an ID (an investor ID) identifying an investor. Each of the records stores information representing an e-mail address of an investor, a code representing an investment procedure selected by the corresponding investor and a desired investment amount, etc. Each of the tables stores information representing the total amount of investment, on the basis of each of the records.

The program information database 160 includes a rewritable storage device, such as a hard disk device, etc., and stores data (program information) representing a created picture program. In this case, the program information is written in a format that is distributable through the Internet 10. The program information is distributable according to such a procedure as a streaming distribution procedure, for example.

The input unit 170 includes an input device, such as a keyboard, a mouse, etc. The input unit 170 is used for inputting and updating the proposed information and the program information which are stored in the plan information database 140 or the program information database 160.

The output unit 180 includes an output device, such as a display device, a printer, etc., and outputs processing results of the controller 110 at need.

The terminal 200 includes an information processor, for example, a personal computer having at least a controlling unit, a storage unit, an input unit and an output unit. The terminal 200 is connected to the Internet 10 through a gateway device (e.g., ISP (Internet Service Provider), etc.) using a communication unit, such as a modem, TA (Terminal Adapter). The storage unit of the terminal 200 stores a predetermined browser program for interpreting various web page data transmitted through the Internet 10 and outputting the data to the output unit in the form of a web page. The controlling unit executes this browser program, thereby making the web page browsable.

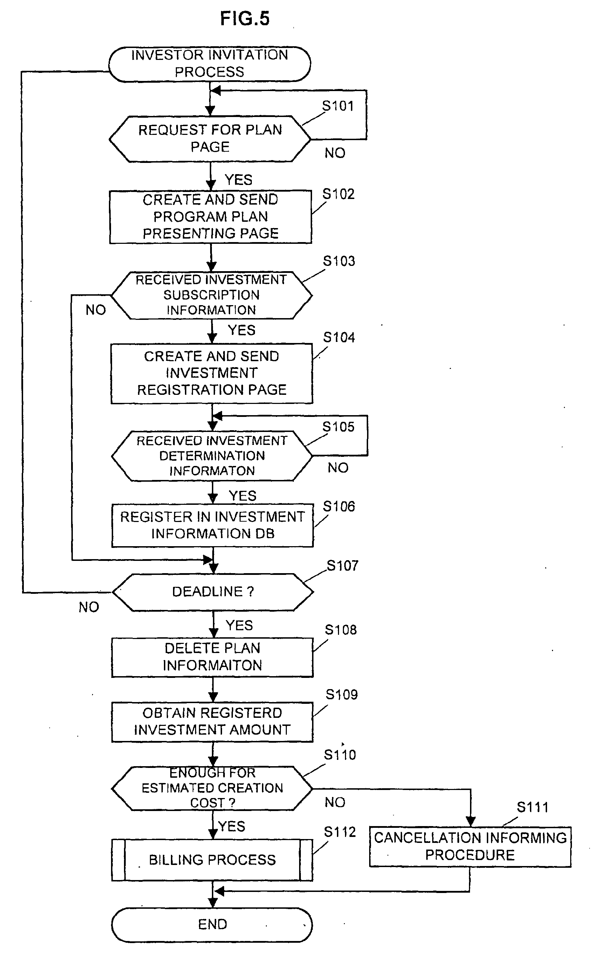

Explanations will now be made to an investor invitation process to be carried out by the server 100 in this embodiment with reference to the flowchart of FIG. 5. In this embodiment, the web server unit 130 of the server 100 serves up a web site which can be accessed through the Internet 10.

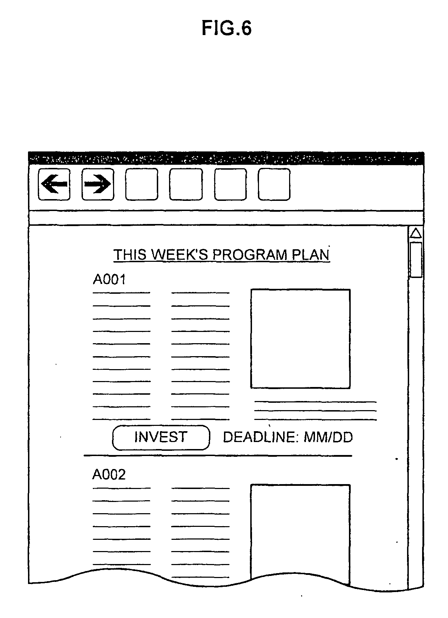

The communication unit 120 of the server 100 receives an access request for accessing a program plan browsable page sent by the terminal 200 (Step S101: Yes). Then, the web server unit 130 acquires the program plan information stored in the plan information database, creates web page data representing a program plan presenting page illustrated in FIG. 6, and sends the created data to the terminal 200 having requested the data (Step S102).

In more particular, upon reception of the access request, the web server unit 130 accesses the plan information database 140, refers to the plan information reference table, and acquires all of the plan information. The web server unit 130 creates web page data including the acquired plan information, and sends the created data to the terminal 200 having requested the access.

Upon establishment of a session between the terminal 200 and the web server unit 130, the web server unit 130 crates ID information (e.g., a cookie file, etc., hereinafter referred to as "terminal ID information") for identifying the terminal 200, and stores the created information in the storage unit of the corresponding terminal 200, thereby identifying a communication end point to which the terminal 200 connects in future sessions. On the ground of this, what is called "terminal 200" hereinafter indicates a terminal 200 which has sent an access request in step S101 of this process.

As shown in FIG. 6, in the program plan presenting page, text information and image information are set, and also an "Invest" button is prepared for each plan. To this "Invest" button, information (hereinafter referred to as "plan ID information") for identifying a corresponding plan is invisibly appended.

That is, the program plan browsable page is displayed by the browser program on the terminal 200, and a user of the terminal 200 selects (e.g., by clicking on) the "Invest" button corresponding to a program plan that the user desires to invest, thereby sending the terminal ID information and the plan ID information (the combination of which is hereinafter called "investment subscription information") to the server 100.

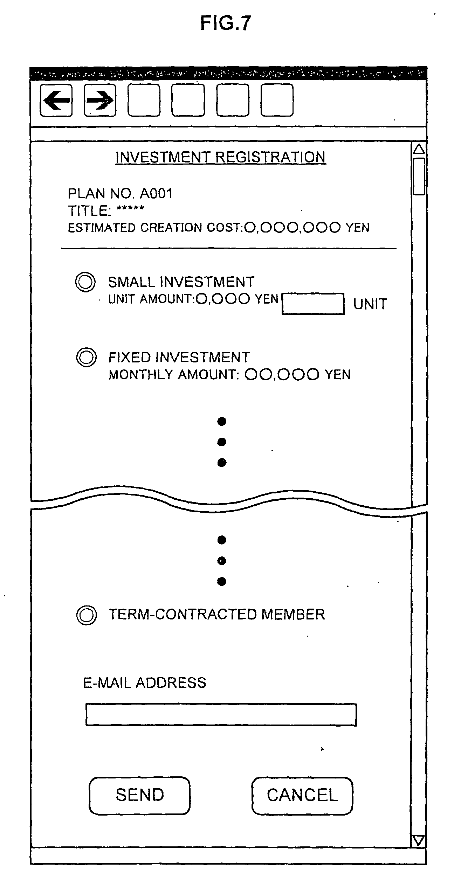

If the communication unit 120 of the server 100 receives investment subscription information from the terminal 200 (Step S103: Yes), the web server unit 130 creates an investment procedure registration page corresponding to the selected program plan as shown in FIG. 7, on the basis of plan ID information included in the investment subscription information, and sends the created page to the terminal 200 (Step S104).

In more particular, the web server unit 130 accesses the plan information database 140, refers to a plan information reference table corresponding to the plan ID information, and acquires the stored information. The web server unit 130 accesses the investment information database 150, refers to the investment amount allocation reference table, and acquires information representing each unit amount of investment corresponding to the cost of creating the corresponding program. Then, the web server unit 130 creates web page data representing an investment procedure registration page including the information acquired from the plan information database 140 and investment information database 150.

As shown in FIG. 7, on the investment procedure registration page, information representing a plan ID number, a title, and the estimated cost of creating a program is shown based on the information acquired from the plan information database 140. Information representing an investment procedure for the corresponding program plan is also displayed in the form of a list. The information representing each investment procedure includes related information (e.g. information representing the unit amounts of investment) acquired from the investment information database 150, and selection means (e.g. radio buttons or the like) is attached thereonto. The page shows a text box for inputting an e-mail address of one who desires to invest and also a "Send" button for sending information representing a selected investment procedure and the input e-mail address to the server 100.

In this description, a small investment, a fixed investment, and a term-contracted investment are optional procedures, and the one who desires to invest selects an investment procedure therefrom. According to the small investment procedure, the program creation company sets a predetermined unit amount of investment calculated based on the estimated total creation cost, and then the one who desires to invest specifies the number of investments, for example. According to the fixed (monthly report) investment procedure, the program creation company presents the investment amount per person, calculated based on the estimated total creation cost of a program, for example. In the case where the program has been determined to be broadcasted, the company bills the person for the monthly investment amount during the broadcasting period. According to the term-contracted investment, the investor makes a contract (member registration) with the program creation company beforehand, reserves an investment amount for a predetermined period of time, and specifies to which plan and how much of the reserved money should be assigned.

The one who desires to invest selects a desired investment procedure through operation of the terminal 200, and inputs information (hereinafter referred to as "additional information") representing the investment amount and the number of investments at need. Information (hereinafter referred to as an "investment procedure code") specifying a corresponding investment procedure is invisibly appended to the selection means, including the radio buttons shown on the investment procedure registration page. Upon selection of the "Send" button, the plan ID information, the investment procedure code, the additional information, and the information representing the e-mail address (the combination of which is called "investment determination information" hereinafter) are sent to the server 100.

If the communication unit 120 of the server 100 receives the investment determination information from the terminal 200 (Step S105: Yes), the web server unit 130 delivers the received information to the controller 110. The controller 110 accesses the investment information database 150, and registers the received investment determination information in the subscribed investment amount information table (Step S106).

As shown in FIG. 4(b), the subscribed investment amount information table is prepared for each program plan, various information is registered in a table for a corresponding program plan based on the received plan ID information. The information representing the investment amount is calculated and registered in accordance with the subscriber-selected investment procedure. For example, in the case where the selected investment procedure is "small investment", a value, obtained by multiplying the number of investments and the unit amount of investment which are input by the investor as the additional information, is registered.

Information representing the investment amount stored in the subscribed investment amount information table is occasionally summed up, to obtain the total investment amount. In the example of FIG. 4(b), a value representing the total investment amount is recorded in the lowest row of each table.

As shown in the program plan representing page illustrated in FIG. 6, the deadline for subscribing an investment is set. The controller 110 determines whether or not the deadline for subscribing an investment for a corresponding program plan has been reached (Step S107).

In the case where the deadline has not yet been reached (Step S107: No), the operations of above steps S101 to S106 are repeatedly executed, thereby accepting further subscriptions from investors.

In the case where the deadline has been reached (Step S107: Yes), the controller 110 instructs the web server unit 130 to delete information representing the corresponding program plan from the program plan browsable page (Step S108).

Upon deletion of the program plan information in step S108, the controller 110 accesses the investment information database 150, and acquires the total investment amount from a subscribed amount information table corresponding to the program plan (Step S109).

The controller 110 compares the total investment amount acquired in step S109 and the estimated cost of creating the corresponding program, and determines whether or not the total investment amount is enough for a predetermined amount of the estimated cost of creating the program (Step S110).

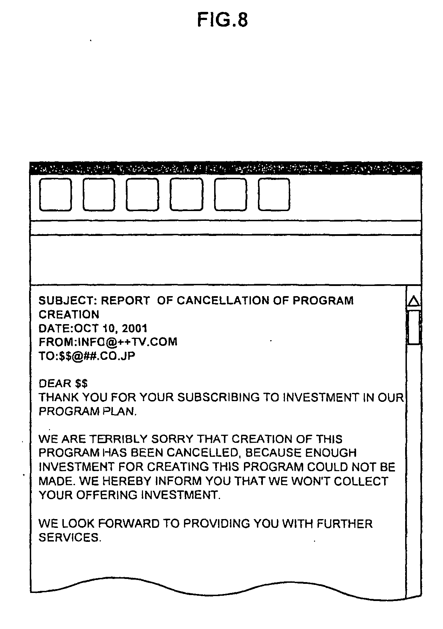

In the case where the total investment amount is not enough for the predetermined amount (Step S110: No), it is estimated that the corresponding program can not be created, thereby stopping the progress in the program plan. In this case, the controller 110 accesses the investment information database 150, acquires e-mail address information of investors from the subscribed investment amount information table corresponding to the program plan. Further, the controller 110 controls the mail server unit 135 to create and send an e-mail, which is shown in FIG. 8 and reports that the creation of the program has cancelled and that no bill for the subscription is generated (Step S111). Upon complete notification to all investors, the controller 110 deletes the subscribed investment amount information table corresponding to the program from the investment information database 150.

In the case where the total investment amount is enough for the creation cost, the program's creation can be realized, thereby executing a predetermined billing process for each investor (Step S112), and completing the process.

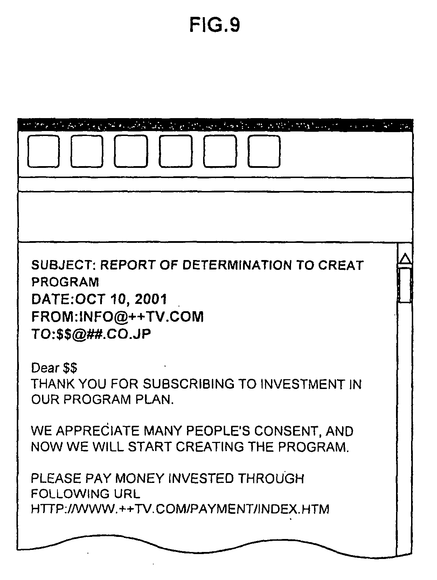

The procedure used for the billing process in step S112 is arbitrary. For example, the mail server unit 135 sends an e-mail, which is shown in FIG. 9 and reports that the program's creation can be realized because the investment amount is enough for that, to the investors. In this case, for example, URL (Uniform Resource Locator) information linked to an input form page for a payment process is written, in a predetermined link format, for example, a hyperlink format, etc., on this e-mail.

The investors access the payment form page based on the URL information written on the received e-mail. In this case, for example, the investors input a credit card number, etc., and sends it to the server 100, thereby completing the billing process.

After this, the corresponding program is created using the invested money collected in the billing process in step S112, and stored in the program information database 160 in a format that is distributable through the Internet 10.

The information stored in the program information database 160 is distributable through the Internet 10 based on a predetermined distribution schedule.

The format of distributing the program is arbitrary. For example, the program information may be distributed to those investors' terminals 200 upon user authentication. In the case where there is no limitation of viewers, some advantage may be provided to the investors. The advantage is provided to the investors, thereby to expectedly increase the number of the investors and efficiently realize the program's creation.

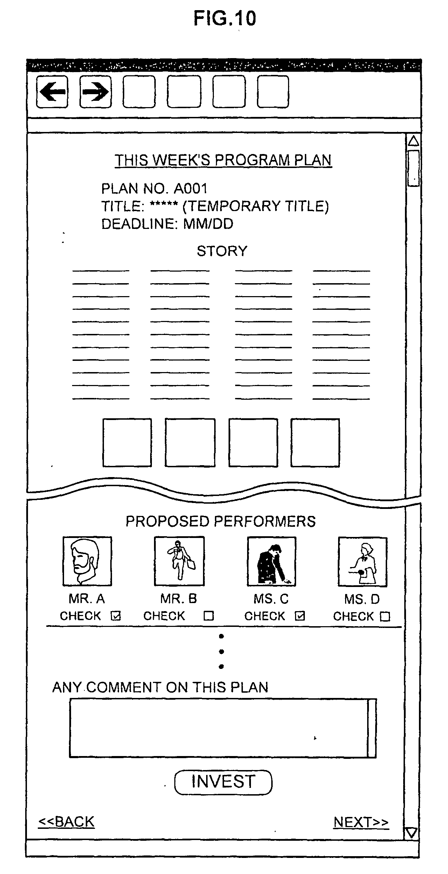

In this case, for example, it may be an advantage that investors can participate in planning a program. For example, as the program plan presenting page defined in step S102, a page that can be browsed only by investors is prepared. The page shows proposed performers, for example, and then a desired performer(s) may be selected therefrom. The example of this program plan presenting page is shown in FIG. 10.

As illustrated, on this program plan presenting page, likewise a general program plan presenting page, text and images representing the plan contents are displayed, and also information representing photos and names of the proposed performers is displayed. Selection means, for example, a check box or the like is appended to each proposed-performer information. One who desires to invest in this program plan can select a desired performer from the presented proposed performers. Further, a text box for inputting comments on the plan may be prepared thereon.

That is, the one who desires to invest can inform the server 100 of the desired performer or comments, when informing the server 100 that he/she desires to do so. In the case where it is determined that the program will be created, the information representing the desired performer and received from each investor is integrated and interpreted, and the program can be created based on the frequently-requested performers and the collected comments.

By this, a viewer-desired program can be created. Such an advantage is given only to the investors, thereby resulting an increase in the number of investors. Note that, in the above example, the proposed performers are exemplarily explained. However, the information to be presented is arbitrary. For example, a proposed director or script writer may be presented.

In the case where the program plan is presented only to the investors, as described above, it is effective also in the. case where it is not intended to show the plan to unspecified persons. That is, the program plan can be presented only to specified persons who are expected to invest. In this case, for example, user registration is completed in advance, and user authentication is achieved at the time the program plan is browsed, thereby limiting those who can browse the plan. The terminal 200 of the person who are expected to invest is connected via a closed network, and then the program plan information may be browsed only via the closed network.

In this case, the server 100 stores an investors' past history of investment, and the program preference of each investor may be interpreted. When the corresponding investor accesses the server 100 and browses the program plan information, the program plan may be selected and presented in accordance with the preference of the investor. According to this configuration, the investment rate with respect to the program plan can be improved.

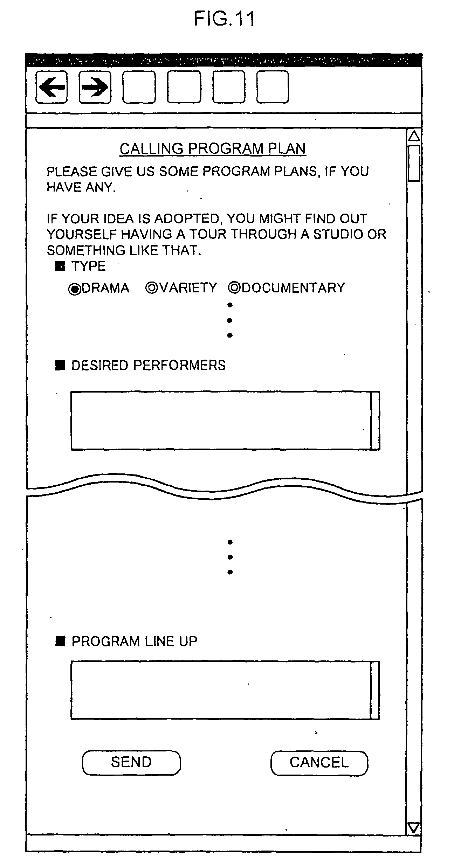

Program plans themselves can be gathered from investors or viewers. In this case, the server 100 prepares a predetermined input form page shown in FIG. 11, for example, and the program plans may be input and sent from the terminal 200.

Further, the program creation company allocates money among investors in accordance with their investment amounts, based on the profit gained from the broadcasting of the created program (including payment for viewing broadcast programming, sponsor fee, broadcasting right, business through secondary usage). The server 100 refers to the subscribed investment amount information table, and determines each investor's percentage of the total investment amount, for example. Further, the server 100 transfers money to each investor's account through, for example, an electronic settlement method. Note that 5% of the program's profit is divided by each investor's percentage, and the division result is added to each investor's investment amount, obtaining an amount of money to be allocated to each investor.

### Industrial Applicability

In the above embodiment, the description has exemplarily been made to the case where the created program is distributed through the Internet 10. However, means for distributing (broadcasting) the program is not limited to the Internet. For example, the means may be a conventional broadcasting form, such as ground wave broadcasting, satellite broadcasting, cable TV broadcasting or the like. In any one of such broadcasting forms, as described above, the plan is presented, the invested money is collected, the desired performer is selected, and the comments are collected, using the server 100, the Internet 10 and the terminal 200, so as to efficiently create the program.

The server 100 in the embodiment of the present invention is not limited to an exclusive system, and can be realized using an ordinary computer system. For example, a program for executing any of the above is stored on a medium (a flexible disk, a CD-ROM, etc.), and the program is installed on a mainframe computer from this medium, thereby forming the server 100 executing the above processes.

Means for supplying the computer with the program is arbitrary. For example, the program may be supplied through a communication line, a communication network, a communication system, etc. In this case, for example, the program is posted on a Bulletin Board System (BBS) of a communication network, and embedded in a carrier wave so as to be distributed through a network. Then, this program is activated, and executed likewise other application programs under the control of the OS, thereby executing the above processes.

The above description is intended to be illustrative and not restrictive. Many embodiments, other than the provided examples, and many usages will be apparent to those of skilled in the art upon reviewing the above description. The scope of the present invention should, therefore, be determined not with reference to the above description, but should instead be determined with reference to the following claims, along with the full scope of equivalents to which such claims are entitled.

This application is based on Japanese Patent Application No. 2001-271625 received on September, 7, 2001 and the same Patent Application No. 2301-312280 received on October, 10, 2001 and including specification, claims, drawings and summary. The entire contents of these applications are herein cited.

## Claims

1. A program creation support method comprising:
a plan presenting step of presenting plan information representing a plan of a program through a communication network;
an investor inviting step of inviting an investor who invests in a creation cost of the program represented in the plan presented in said plan presenting step, through said communication network;
a creation cost collecting step of billing and collecting the creation cost of the program from the investor who has subscribed to invitation in said investor inviting step, through said communication network; and
a program creation step of creating the program represented in said plan information, spending the creation cost collected in said creation cost collecting step.

2. The program creation support method according to claim 1, wherein:
said investor inviting step includes presenting a predetermined unit amount of investment; and
said creation cost collecting step includes billing said investor for said predetermined unit amount of investment so as to collect it.

3. The program creation support method according to claim 1, wherein:
said investor inviting step includes registering said investor in advance and collecting information representing a program for which the investor desires to invest and a desired investment amount from the registered investor; and
said creation cost collecting step includes assigning the investment amount that the registered investor desires to invest to the creation cost for the investment-desired program.

4. The program creation support method according to claim 1, wherein
said creation cost collecting step includes collecting information representing an investment amount that said investor desires to invest, determining whether or not the program is created based on a total amount of investment represented in the collected investment-desired amount information, and billing said investor for the desired investment amount and so as to collect it in a case where it is determined that the program is created.

5. The program creation support method according to claim 1, further comprising
an advantage providing step of providing said investor with a predetermined advantage, and wherein
said advantage providing step includes collecting a comment on the plan presented in said plan presenting step from said investor.

6. The program creation support method according to claim 5, further comprising
a plan acquiring step of acquiring the plan information representing the plan of the program, and wherein
said plan acquiring step includes acquiring the plan of the program from said investor.

7. The program creation support method according to claim 6, wherein:
said plan presenting step includes presenting information representing proposed elements for creating the planned program; and
said advantage presenting step includes collecting information specifying a desired one of the proposed elements from said investor.

8. The program creation support method according to claim 1, wherein:
said communication network is Internet; and
said program creation step includes creating the program in a form that the created program is distributable as program information through said Internet;
said method further comprises a program distributing step of distributing said program information through said Internet.

9. A program creation support system for supporting creation of a program to be distributed to a plurality of terminals from a center through a communication network, said center comprising:
a plan information acquiring unit which acquires plan information representing a plan of a program;
a plan information sending unit which sends the plan information acquired by said plan information acquiring unit together with invitation information for inviting an investor investing in this plan, to said plurality of terminals through said communication network;
a subscription information receiving unit which receives subscription information for subscribing to invitation represented in the plan information sent by said plan information sending unit, from said terminals through said communication network;
a billing processing unit which executes a billing process for billing the investor who has sent the subscription information received by said subscription information receiving unit for a program creation cost, through said communication network;
a program information creating unit which creates program information representing the program created using the program creation cost collected through the billing process by said billing processing unit;
a program information storage unit which stores the program information created by said program information creating unit; and
a program distributing unit which distributes the program information stored in said program information storage unit through said communication network.

10. The program creation support system according to claim 9, wherein:
the subscription information includes information representing an investment amount that the investors desire to invest;
said system further comprises a creation determining unit which determines whether or not the corresponding program is created, based on a total amount of desired investment represented in the subscription information received by said subscription information receiving unit; and
said billing processor executes said billing process, in a case where said creation determining unit determines that the program is created.

11. A server device comprising:
connection means for connecting with a communication network;
plan acquiring means for acquiring and storing a plan of a program;
plan presenting means for presenting plan information representing the plan acquired by said plan acquiring means through said communication network by controlling said connection means;
invitation information presenting means for creating investor invitation information representing invitation to a person investing in a plan represented in the plan information presented by said plan presenting means, and presenting the created investor invitation information through said communication network by controlling said connection means;
subscription information receiving means for receiving subscription information representing a subscription request on the investor invitation information presented by said invitation information presenting means through said communication network by controlling said connection means; and
billing processing means for executing a billing process for billing said investor for a creation cost of the program represented in the plan presented by said plan presenting means through said communication network by controlling said connection means.

12. The server device according to claim 11, wherein:
said subscription information includes information representing an investment amount that said investor desires to invest;
said subscription information receiving means further includes
total amount calculation means for calculating a total amount of desired investment represented in the received subscription information, and
creation determination means for determining whether or not the program is created, based on the total amount of desired investment calculated by said total amount calculation means; and
said billing processing means executes said billing process in a case where said creation determination means determines to created the program.

13. The server device according to claim 12, further comprising
mail server means for creating a predetermined e-mail, and controls transmission of the e-mail through said communication network by controlling said connection means, and wherein
said mail server means creates an e-mail representing a determination result of said creation determination means, and sends the e-mail to the investor.

14. The server device according to claim 11, wherein:
the plan information presented by said plan presenting means includes information representing proposed elements for creating the program;
the subscription information includes information specifying a program that the investor desires to invest;
said server device further includes additional information sending means for sending information representing a predetermined input form to sender of the subscription information through said communication network by controlling said connection means; and
said additional information sending means sends information representing an input form for selecting an element that said investor desires, of the proposed elements corresponding to the program represented in the subscription information received by said subscription information receiving means.

15. The server device according to claim 14, wherein
said additional information sending means sends information representing an input form for inputting an comment on the plan presented by said plan presenting means.

16. The server device according to claim 11, wherein
said plan acquiring means acquires plan information from outside through said communication network by controlling said connection means.

17. The server device according to claim 11, further comprising:
investment history storage means for storing information representing an investor's history of investment; and
investment tendency interpreting means for interpreting each investor's tendency to investment, based on the investment history information stored in said investment history storage means, and wherein
said plan presenting means selects and presents a program's plan based on an interpreted result of said investment tendency interpreting means.

18. The server device according to claim 11, wherein:
said communication network is Internet; and
said server device further comprises
program information creation means for creating program information, in a form that is distributable through said Internet, representing a program created using a creation cost collected based on the billing process of said billing processing means,
program information storage means for storing the program information created by said program information creation means, and
program distribution means for distributing the program information stored in said program information storage means through said Internet by controlling said connection means.

19. The server device according to claim 18, wherein
said program distribution means distributes the program information to said investor.

20. A computer program product storing a computer code program for making a computer function as the server device according to any one of claims 12 to 19, said program being embodied on a computer readable medium.
